Europäisches Patentamt

European Patent Office

Office européen des brevets

(11) Publication number: **0 543 299 A1**

# EUROPEAN PATENT APPLICATION

(21) Application number: **92119502.0**

(22) Date of filing: **14.11.92**

(51) Int. Cl.⁵: **G03C 5/16**, G03C 11/00, G01T 1/02

(30) Priority: **21.11.91 JP 306358/91**

(43) Date of publication of application:
**26.05.93 Bulletin 93/21**

(84) Designated Contracting States:
**DE FR GB NL**

(71) Applicant: **KONICA CORPORATION**
**26–2, Nishi–shinjuku 1–chome**
**Shinjuku–ku**
**Tokyo(JP)**

(72) Inventor: **Kumamoto, Kenji, Konica**
**Corporation**
**1 Sakura–machi**
**Hino–shi, Tokyo(JP)**

(74) Representative: **Türk, Gille, Hrabal, Leifert**
**Brucknerstrasse 20**
**W–4000 Düsseldorf 13 (DE)**

(54) Method for the sensitometry of silver halide photographic light–sensitive materials.

(57) A method for a sensitometric evaluation of a silver halide photographic light–sensitive material which estimate in advance aging–deterioration of the photographic material caused by natural radiation is provided, comprising the steps of:

subjecting the material to X–ray exposure by measuring a radiation dose of X–ray source with a a dosimeter to calibrate an exposure dose of X–ray;

subjecting the material to stepwise light–exposure; and

evaluating the effect of natural radiation on the material.

Rank Xerox (UK) Business Services
(3.10/3.6/3.3.1)

## FIELD OF THE INVENTION

The present invention relates to a process for the sensitometry of a silver halide photographic light – sensitive material, more specifically to an improved process for the sensitometry of a silver halide photographic light – sensitive material to estimate, in advance, a performance deterioration of a light – sensitive material caused by natural radiation after manufacture, as a means of offering a stable silver halide photographic light – sensitive material less in performance fluctuation due to aging.

## BACKGROUND OF THE INVENTION

In general, silver halide photographic light – sensitive materials are liable to increase fog and thereby deteriorate their performances in the course of manufacture or during storage. Particularly, high sensitivity emulsions have a marked tendency to deteriorate.

Of these performance deteriorations, the deterioration during storage occurs only after at least half a year, or several years, from the time of manufacture of a light – sensitive material; therefore, an accurate estimation of a performance deterioration caused by aging during storage cannot be made at the time of designing or manufacturing a light – sensitive material.

There has so far been used, for example, a method of subjecting a light – sensitive material to forced deterioration after manufacture by aging it under a high temperature and a high humidity over a period of time, as an alternative test method for estimating an aging deterioration during storage in a short time. But this method can scarcely have a correlation with an actual aging deterioration and, therefore, cannot be a test method for evaluating alternative characteristics for practical use except for low sensitive photographic material such as a printing paper.

With the increasing tendency toward high – sensitive silver halide emulsions, the effect of natural radiation on light – sensitive materials has become an important issue. For example, the effect of natural radiation on a supersensitive film are reported in detail in "Shashin Kogyo (The Photographic Industry)", p. 11, Nov., 1986.

The report proposes a test method using a radioactive isotope, such as $^{137}$Cs or $^{60}$Co, which radiates $\gamma$ – rays as alternative characteristics of natural radiation, because the effect of natural radiation on light – sensitive materials is primarily attributable to $\gamma$ – rays.

However, these two radioactive isotopes, $^{137}$Cs and $^{60}$Co, cannot be appropriate radiation sources as alternative characteristics for aging deterioration, because the sensitivity of silver halide to $\gamma$ – rays is in the area of 10 KeV to 200 KeV, but the $\gamma$ – rays radiated by these radioactive isotopes deviate from this sensitivity area to a large extent. Further, since the radioactive isotope such as $^{137}$Cs or $^{60}$Co always radiates constant $\gamma$ – rays, the exposing dose cannot be arbitrarily controlled; more over, these isotopes have disadvantages of involving an inefficient exposing process which requires several hours and being hazardous substances which require special care in handling.

Under the circumstances, there has been eagerly demanded a test method for evaluating a silver halide photographic light – sensitive material which can evaluate the aging deterioration of a light – sensitive material caused by natural radiation simply and rapidly in the period between product designing and shipping and give a good correlation with actual aging data.

## SUMMARY OF THE INVENTION

Accordingly, a first object of the present invention is to provide a method for the sensitometry of a silver halide light – sensitive material which can estimate in advance fogging of a light – sensitive material caused by natural radiation during storage.

A second object of the present invention is to provide a method for the sensitometry of a silver halide light – sensitive material which has a good correlation with an actual aging deterioration caused by natural radiation and is simple to handle, accurate in measurement and free from hazard. Other objects of the invention will become apparent from the detailed description which follows.

The present inventors have accomplished the invention by finding out that the objects of the invention are achieved by the following:

That is, the objects of the invention are achieved by a method for the sensitometry of a silver halide photographic light – sensitive material which comprises the steps of exposing a silver halide photographic light – sensitive material to X – rays having various doses and then subjecting it to stepwise exposure in the usual manner and is used for evaluating the effect of natural radiation, wherein the exposure is carried out while measuring the dose of the X – rays with a dosimeter.

## BRIEF DESCRIPTION OF THE DRAWINGS

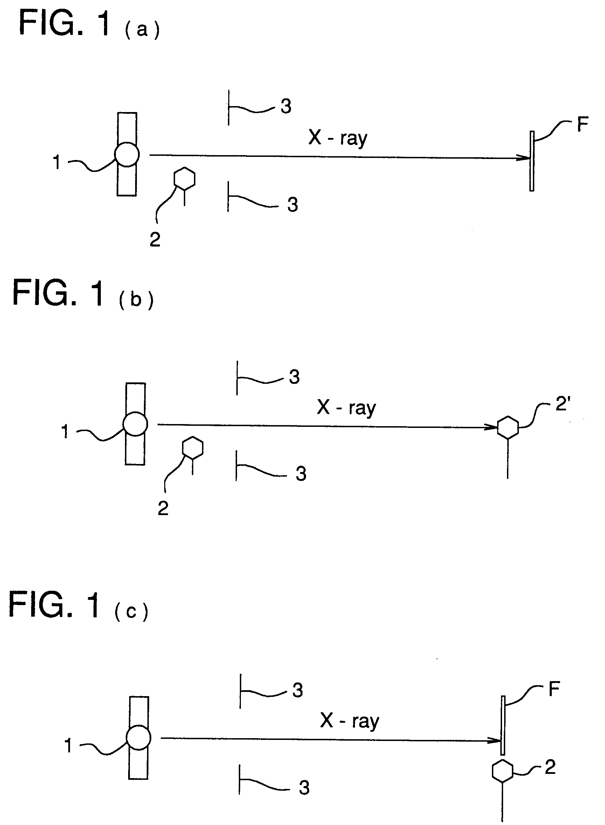

Fig. 1 shows block diagrams of the X－ray irradiation apparatus used in the sensitometry of the invention.

1:      an X－ray tube
2:      a dosimeter
2':     a dosimeter
3:      a diaphragm for preventing X－rays from scattering
F:      a light－sensitive material

## DETAILED DESCRIPTION OF THE INVENTION

The invention is hereinafter described in detail.

In the sensitometry according to the invention, an X－ray generator for medical use can be employed as a radiation source of X－rays, which are used as an alternative to natural radiation. The exposure dose of the X－rays varies with types or exposing conditions, but usually the X－ray tube voltage is in a range of 40 Kvp to 200 Kvp and the exposing time is in a range of 1 to 2000 msec. In measuring the X－ray dose according to the invention, the dose can be monitored by use of a dosimeter.

The dosimeter may be a conventional one. For example, an Ionex Dosemaster Model 2950B made by Nuclear Enterprise can be favorably used.

Such a dosimeter may be arbitrarily mounted on an irradiation apparatus, as long as it is fixed at a position where exposure of a light－sensitive material is not obstructed. The distance between the X－ray tube as radiation source and the dosimeter is not particularly limited, but it is preferably in a range of 10 cm to 100 cm, the distance from the X－ray tube to a position to fix a light－sensitive material across the dosimeter is preferably in a range of 100 cm to 400 cm.

In the invention, two methods are favorably used for the measurement of X－ray doses, as described in detail hereunder by referring to the drawings attached hereto. The drawings are block diagrams showing the X－ray irradiation apparatus for measuring sensitivity of the invention.

In Fig. 1, 1 is an X－ray tube used as a radiation source in the invention, 2 and 2' each indicate a dosimeter, 3 is an aperture to prevent X－rays from scattering, and F is a silver halide photographic light－sensitive material, which is hereinafter simply referred to as film.

In Fig. 1(a), the X－rays radiated from X－ray tube 1 are irradiated to film F while their doses ($M_1$) are monitored by dosimeter 2.

To calibrate the exposure dose of the irradiated X－rays, measurement is made according to Fig. 1(b). In Fig. 1(b), the dose of the X－rays radiated from X－ray tube ($M_2$) is monitored by dosimeter 2.

Dosimeter 2' is newly set at the position where film F was placed, and the dose ($A_2$) at the film position is measured at the same time. As a result, the dose (A) of the X－rays irradiated to the film can be obtained by the following equation:

$$A = A_2 \times M_1 / M_2$$

The other method is that shown by Fig. 1(c), in which a dosimeter and a film are jointly fixed at the film position.

In the above methods, the relation between the X－ray exposure dosage (A) and the amount of natural radioactive rays is given by $A = R \times Z$, where R is a constant given by the quality of radiation and having a magnitude of 0.1 to 0.2, and Z is an exposure amount of natural radioactive rays. After irradiating the whole surface of the film with the X－rays, the film is immediately subjected to a stepwise exposure of 0.32 cms to 320 cms using a tungsten lamp as light source on a Sensitometer Model KS－7B made by Konica Corp. Obtained is an exposed sample ready for sensitometry according to the invention.

In the present invention, the photographic material is preferably subjected to accelerated aging under a high temperature and a high humidity to correlate the inventive method before subjecting to X－ray exposure to correlate the inventive method with actual aging deterioration.

## EXAMPLES

The invention is hereunder described with examples, but the embodiment of the invention is by no means limited to these examples.

Example 1

Using a Konica NEW A medical X–ray film which is commercially as a silver halide light–sensitive material, exposure was made as follows:

X–ray irradiation conditions

X–ray tube voltage: 110 kvp,

X–ray tube current: 250 mA,

Irradiation time: 1000 msec,

a 42.5–mm aluminium filter was used.

(In making the exposure, it is preferable to put photographic film in a polyvinyl chloride resin bag for or in a cassette for radiography, use of the polyvinyl chloride resin bag is particularly preferred.)

Heat treatment

A hundred sheets of the film were packed airtightly in a barrier bag as finished products are packed and then subjected to heat treatment for 1 day at 55°C.

Measurement of doses

A 35–ml ion chamber was used (Ionex Dose Master manufactured by Nuclear Enterprise). The irradiation was made using both (a) and (b) in the figure.

Processing

The exposed samples were processed at 35°C for 90 seconds using an automatic processing machine for radiography model KX–500, a developer XD–SR and a fixer XF–SR each made by Konica Corp. The results obtained are shown in Table 1.

## Table 1

| Sample No. | Heat Treatment (55°C, 1 day) | X-ray Irradiation | Dose-monitoring | Values After Processing | |
|---|---|---|---|---|---|
| | | | | Sensitivity | Fog |
| 1A | – | – | – | 100 | 0.17 |
| 1B | – | – | – | 120 | 0.24 |
| 2 | performed | – | – | 90 | 0.18 |
| 3 | – | performed | – | 90–160 | 0.20 \| 0.26 |
| 4 | – | performed | performed | 130 | 0.23 |
| 5 | performed | performed | performed | 120 | 0.24 |

In the table, sample 1A, which was subjected to the light–exposure and the processing immediately after the coating, is shown to have a relative sensitivity of 100 and a fog of 0.17, but sample 1B, which was exposed and processed after storage for 1 year at 15°C showed a sensitivity of 120 and a fog of 0.24. This result means that natural storage leads to these properties fluctuated.

Sample 2 was one subjected to forced deterioration by heating, in which 1 day at 55°C corresponds to 1 year at 15°C, according to the estimation by the Arrhenius plotting method.

Apparently, this heat treatment (forced deterioration) does not coincide with an actual storage for 1 year (natural standing).

4

With sample 3, the effect of natural radiation was examined by irradiating the sample with the X−rays under afore−mentioned irradiation conditions using no dosimeter. But resultant values greatly varied with the measuring time because of fluctuation in amounts of the X−rays exposed; therefore, definite results could not be obtained.

Sample 4 was one according to the invention, with which the effect of natural radiation on photographic properties was examined by exposing to X−rays kept constant by monitoring the dose with a dosimeter.

Sample 5 was that which was subjected to the heat treatment (at 55°C for 1 day) followed by the sensitometry according to the invention.

As apparent from the results in Table 1, sample 4 according to the invention is shown to result in a sensitivity and a fog value near to those of the naturally−aged sample 1B. Moreover, sample 5 according to the invention gave the same results as the aged sample 1B, showing an excellent coincidence with the values obtained for the film which was naturally aged for 1 year.

It was also found that the conventional alternative method using heat treatment (sample 2), or the noninventive sample 3 obtained by exposing to the X−rays without monitoring the dose did not give values coincident with those of the sample 1B in both sensitivity and fog and, therefore, can be hardly used as an alternative characteristic.

### Claims

1. A method for a sensitometric evaluation of a silver halide photographic light−sensitive material on the effect of natural radiation thereon
comprising the steps of:
subjecting the material to X−ray exposure by measuring a radiation dose of X−ray source with a a dosimeter to calibrate an exposure dose of X−ray;
subjecting the material to stepwise light−exposure; and
evaluating the effect of natural radiation on the material.

2. The method of claim 1, wherein the dosimeter is located at a position between the X−ray source and the photographic material.

3. The method of claim 2, wherein the distance between the X−ray source and the dosimeter is in a range of 10 to 100 cm.

4. The method of claim 1, 2 or 3, wherein the material is subjected to accelerated aging under a high temperature before said step of subjecting to X−ray exposure.

5. The method of claim 4, wherein said aging is performed over a period of one day at a temperature of 55 °C.

## FIG. 1 (a)

```
                    ⊢    3
                              X - ray                          F
1                                            ⟶
    ⬡
  2        ⊢    3
```

## FIG. 1 (b)

```
                    ⊢    3
                              X - ray                     2'
1                                            ⟶   ⬡
    ⬡      ⊢    3
  2
```

## FIG. 1 (c)

```
                    ⊢    3                            F
                              X - ray
1                                            ⟶
                    ⊢    3                     ⬡    2
```

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | DE-C-640 942 (C.H.F.MÜLLER AG) 24 December 1936 * the whole document * | 1-5 | G03C5/16 G03C11/00 G01T1/02 |
| Y | US-A-2 258 593 (L.F.BLACK) 14 October 1941 * claims * | 1-5 | |
| Y | EP-A-0 283 149 (CANON K.K.) * page 2, line 4 - line 39; claims 1-7 * | 1-5 | |
| Y | J.M.EDER(ED.) 'Ausführliches Handbuch der Photographie, vol.3,part 4: Die Sensitometrie, photographische Photometrie und Spektrographie' 1930 , VERLAG W.KNAPP , HALLE (SA.), DE | 1-5 | |
| | | | TECHNICAL FIELDS SEARCHED (Int. Cl.5) |
| | | | G03C G01T H05G |

The present search report has been drawn up for all claims

| Place of search | Date of completion of the search | Examiner |
|---|---|---|
| THE HAGUE | 01 MARCH 1993 | BUSCHA A.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)